# EUROPEAN PATENT APPLICATION

(11) **EP 4 636 274 A1**
(43) Date of publication of application: **22.10.2025**
(21) Application number: 23903246.9
(22) Date of filing: 24.11.2023
(51) Int. Cl.: F16D 3/205

(54) **TRIPOD CONSTANT-VELOCITY UNIVERSAL JOINT**

(30) Priority: 16.12.2022 JP 2022201319
(71) Applicant: NTN Corporation, Osaka-shi Osaka 530-0005 (JP)
(72) Inventor: ITAGAKI Taku, Iwata-shi Shizuoka 438-8510 (JP); SUGIYAMA Tatsuro, Iwata-shi Shizuoka 438-8510 (JP)
(74) Representative: Grünecker Patent- und Rechtsanwälte PartG mbB
(86) International application number: PCT/JP2023/042238
(87) International publication number: WO 2024/127952

(57) **Abstract**

Provided is a tripod type constant velocity universal joint of a double roller type, in which an outer peripheral surface (33) of a leg shaft (32) has convex curved lines protruding toward both sides in a torque transmission direction (X) in a longitudinal section and in a cross section. A curvature radius ("r") of each of the convex curved lines (arcs (33a)) in the longitudinal section of the outer peripheral surface of the leg shaft (32) is larger than a curvature radius (R) of each of the convex curved lines (arcs (33b)) in the cross section of the outer peripheral surface of the leg shaft (32).

## Description

### Technical Field

The present invention relates to a tripod type constant velocity universal joint.

### Background Art

In a drive shaft to be used in a power transmission system for automobiles, a plunging type constant velocity universal joint is provided on an inboard side (center side in a vehicle width direction) and a fixed type constant velocity universal joint is provided on an outboard side (outer side in the vehicle width direction) in many cases. The plunging type constant velocity universal joint referred to here allows both of angular displacement and axial relative displacement between two shafts, and the fixed type constant velocity universal joint referred to here allows the angular displacement between the two shafts but does not allow the axial relative displacement between the two shafts.

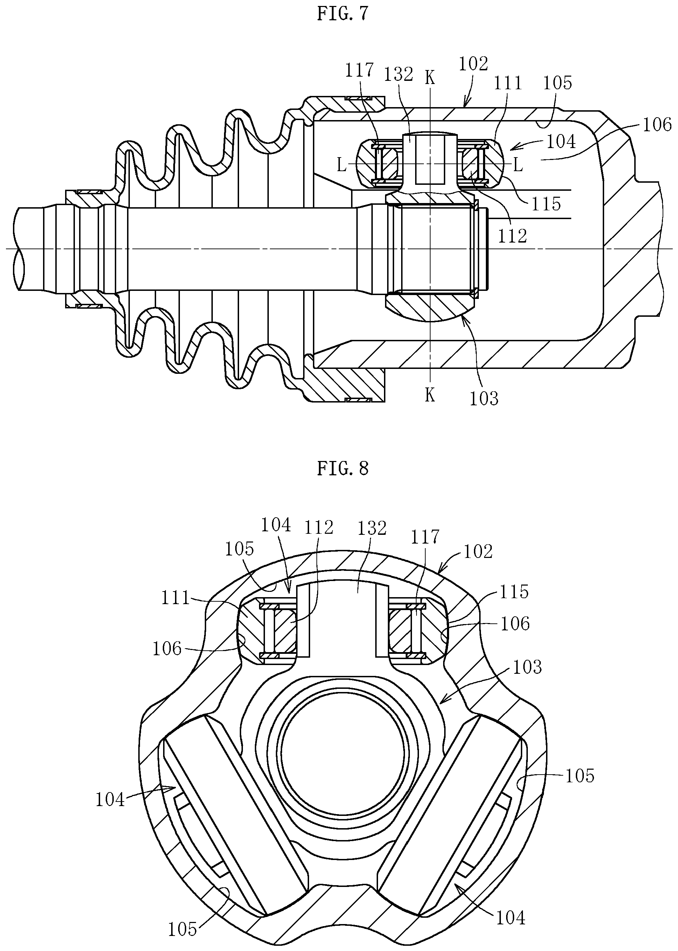

As the plunging type constant velocity universal joint, tripod type constant velocity universal joints have been publicly known. The tripod type constant velocity universal joints include single roller type ones and double roller type ones. In the tripod type constant velocity universal joint of the single roller type, a roller to be inserted in each track groove of an outer joint member is rotatably mounted to a leg shaft through intermediation of a plurality of needle rollers. The tripod type constant velocity universal joint of the double roller type includes, as illustrated in FIG. 7 and FIG. 8, rollers 111 provided in track grooves 105 of an outer joint member 102 and inner rings 112 each being externally fitted to a leg shaft 132 of a tripod member 103 so as to rotatably support the roller 111 (see, for example, Patent Literatures 1 and 2).

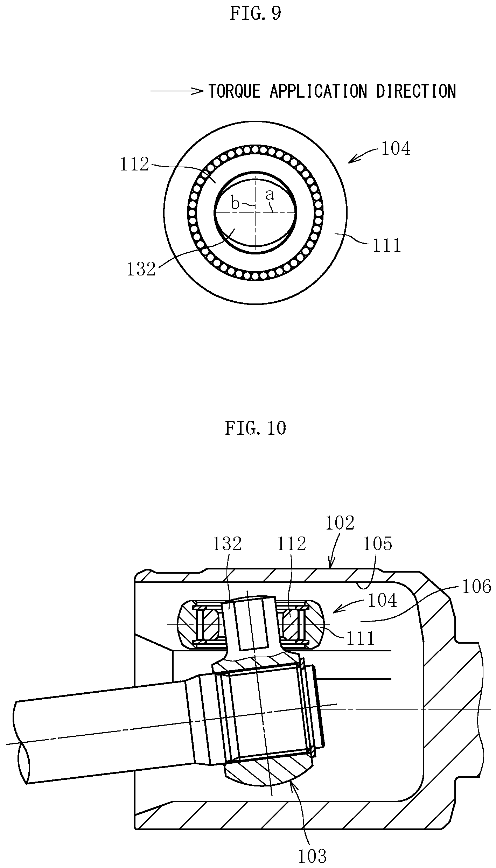

In the tripod type constant velocity universal joint of the double roller type, a cross section of the leg shaft 132 (section orthogonal to an axis of the leg shaft) is formed into an elliptic shape as illustrated in FIG. 9, and an inner peripheral surface of the inner ring 112 is formed to have a protruding arc-shaped cross section as illustrated in FIG. 7. In this manner, as illustrated in FIG. 10, the roller 111 can be rocked with respect to the leg shaft 132. Thus, as compared to the single roller type one, the double roller type one has an advantage in that induced thrust (axial force induced due to friction between components inside the joint) and sliding resistance can be reduced.

### Citation List

Patent Literature 1: JP 2000-320563 A
Patent Literature 2: JP 2957121 B2

### Summary of Invention

### Technical Problem

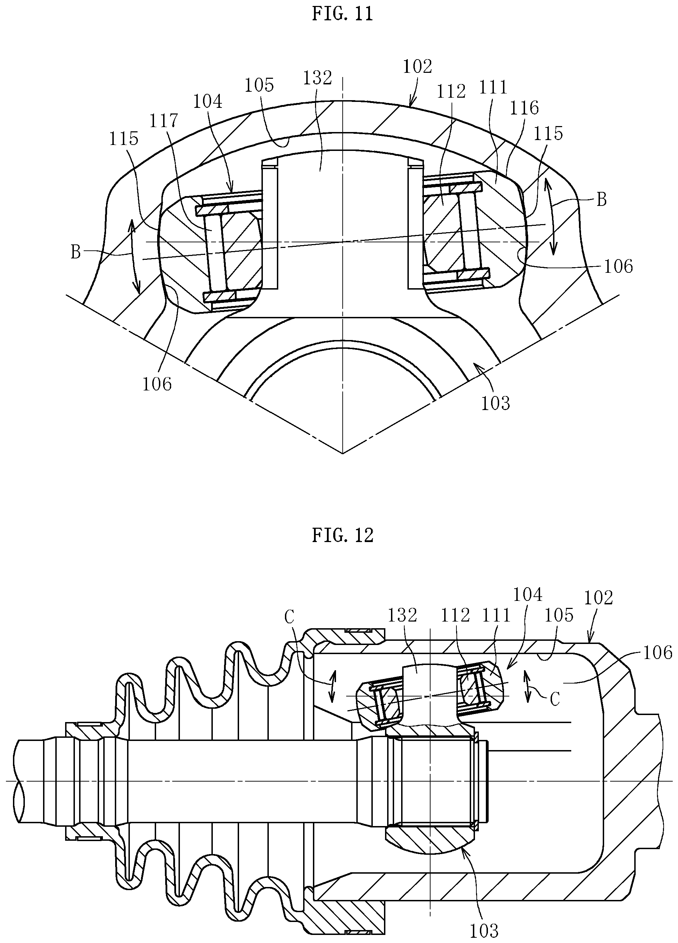

In the tripod type constant velocity universal joint described above, as illustrated in FIG. 8, an outer peripheral surface 115 of the roller 111 is a convex curved surface with an arc-shaped generatrix. Roller guide surfaces 106, which are held in contact with the outer peripheral surface 115, each have a recessed cross section (gothic arch shape) conforming with the shape of the outer peripheral surface 115 of the roller 111, and the outer peripheral surface 115 and each of the roller guide surfaces 106 form an angular contact. Thus, when the constant velocity universal joint is rotated under a state of taking an operating angle, there occurs, because of its structure, a phenomenon in which a roller unit 104 including the roller 111 and the inner ring 112 is inclined in directions indicated by the arrows B (hereinafter referred to as "rightward/leftward inclination) in a section orthogonal to a joint axial direction as illustrated in FIG. 11 or a phenomenon in which the roller unit 104 is inclined in directions indicated by the arrows C (hereinafter referred to as "forward/rearward inclination") in a section parallel to the joint axial direction as illustrated in FIG. 12. When the rightward/leftward inclination or the forward/rearward inclination of the roller unit 104 occurs, rolling and sliding resistance at a contact portion between the roller 111 and the roller guide surface 106 or rotation resistance of the roller unit 104 with respect to the leg shaft 32 increases. Further, needle rollers 117 inside the roller unit 104 cannot roll in a direction of an axis of the outer joint member 102 with respect to the roller guide surface 106. Thus, sliding resistance increases. When these factors are noticeable, induced thrust and sliding resistance increase, resulting in a problem of degradation of NVH (noise, vibration, harshness) characteristics of the constant velocity universal joint.

Further, in the above-mentioned tripod type constant velocity universal joint, a cross section of the leg shaft 132 has an elliptic shape, and an inner peripheral surface of the inner ring 112 has a protruding arc-shaped cross section. Thus, contact between the inner ring 112 and the leg shaft 132 is substantially point contact. Hence, frictional moment, which acts to incline the roller unit 104 along with movement of the leg shaft 132, can be suppressed. Further, even when the joint takes an angle, the leg shaft 132 is held in contact with a center portion of the inner ring 112 in its width direction (direction of an axis of the leg shaft 132) and hence, has a structure that suppresses the rightward/leftward inclination. However, when the joint takes a large angle, a force for causing the forward/rearward inclination (see FIG. 12) is generated in the roller unit 104 because of the elliptic cross section of the leg shaft 132. Further, a contact area between the leg shaft 132 and the inner ring 112 is small. Thus, a contact pressure on a contact surface therebetween increases when, for example, high torque is applied under extremely strict vehicle usage conditions or the like. Thus, there is a concern about an influence on durability of the leg shaft 132.

Meanwhile, in a tripod type constant velocity universal joint described in Patent Literature 2, as illustrated in FIG. 13 and FIG. 14, an outer peripheral surface of a leg shaft 226 of a tripod member 230 is formed in a spherical shape, and a cylindrical inner peripheral surface of a holder 234 is fitted over the spherical outer peripheral surface. Further, roller guide surfaces 224 are each formed into a flat surface, and an outer peripheral surface of a roller 222, which is held in sliding contact with the roller guide surface 224, is formed into a cylindrical surface.

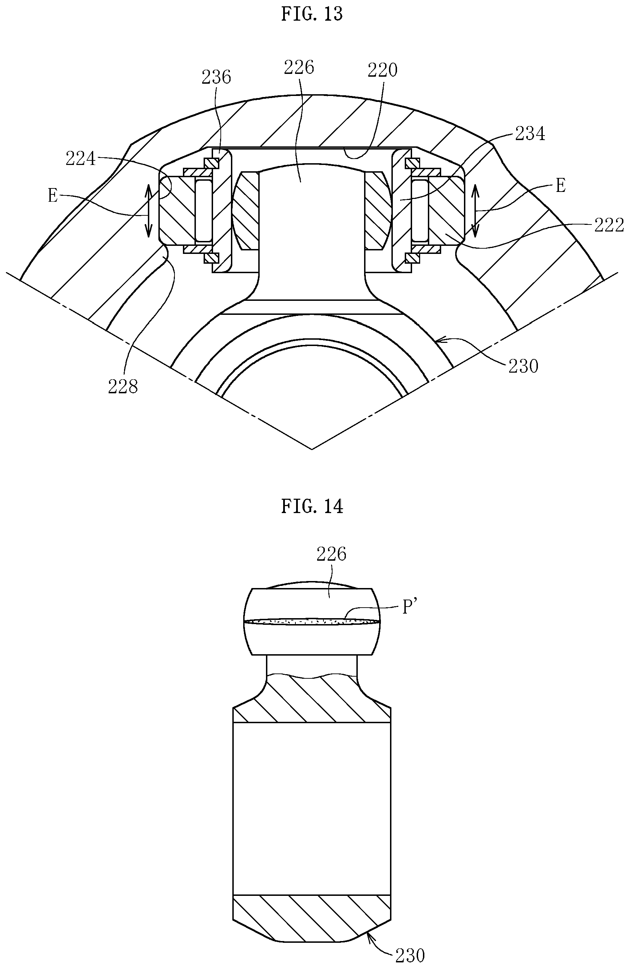

In this tripod type constant velocity universal joint, the inclination of the roller is restricted through the following actions.
· A first action for restricting the inclination of the roller 222 through abutment of an end surface 236 of the holder 234 on a joint radially outer side against a flat surface portion 220 of a track groove.
· A second action for restricting the inclination of the roller 222 through sliding displacement of the roller 222 along the roller guide surfaces 224 in a direction of an axis of the leg shafts 226 (directions E of FIG. 13).
· A third action for restricting the inclination of the roller 222 through rolling of the roller 222 while being held in contact with protruding portions 228 formed at ends of the roller guide surfaces 224 on a joint radially inner side.

In the tripod type constant velocity universal joint, the inner peripheral surface of the holder 234 is a cylindrical surface, and the outer peripheral surface of the leg shaft 226 is spherical. Thus, when torque is applied, the inner peripheral surface of the holder 234 and the leg shaft 226 are brought into contact with each other. A contact portion P' (dotted area of FIG. 14) therebetween has a long and thin elliptic shape elongated in a circumferential direction of the leg shaft 226. Thus, when the joint takes an operating angle, frictional moment, which acts so as to incline the roller 222 along with the movement of the leg shaft 226, is liable to be generated in the contact portion P' described above. Thus, even when the tripod type constant velocity universal joint has a structure with the above-mentioned first to third actions, the forward/rearward inclination of the roller 222 is liable to occur. Thus, sliding resistance, which is generated due to the contact between the roller 222 and the protruding portions 228 or the flat surface portion 220 of the track groove, increases.

Thus, the present invention has an object to reduce contact resistance between components so as to improve the NVH characteristics of a tripod type constant velocity universal joint of a double roller type by preventing inclination of a roller unit while reducing a contact pressure between a leg shaft and an inner ring to maintain durability.

### Solution to Problem

In order to solve the problem described above, the present invention characterized by a tripod type constant velocity universal joint, comprising:
an outer joint member having three track grooves, each extending in a joint axial direction, formed in an inner peripheral surface, the track grooves each comprising a pair of roller guide surfaces opposed to each other in a joint circumferential direction;
a tripod member, which is arranged on an inner periphery of the outer joint member and comprises three leg shafts projecting in a joint radial direction into the track grooves; and
three roller units each comprising a roller arranged on an outer periphery of each of the leg shafts and an inner ring arranged between the roller and the leg shaft, the roller units being supported in a rotatable and rockable state by the leg shafts and being received in the track grooves, respectively,
wherein the rollers each comprise a cylindrical outer peripheral surface,
wherein the pair of roller guide surfaces of each of the track grooves are formed into flat surfaces being parallel to each other,
wherein a pair of guide surfaces being abuttable against the roller from both sides in a direction of an axis of the roller are formed on both sides of each of the roller guide surfaces in a width direction of the roller guide surface,
wherein the inner ring comprises a cylindrical inner peripheral surface,
wherein an outer peripheral surface of each of the leg shafts comprises convex curved lines protruding to both sides in a torque transmission direction in a longitudinal section containing an axis of the leg shaft and in a cross section orthogonal to the axis of the leg shaft,
wherein each of the convex curved lines in the cross section of the outer peripheral surface of each of the leg shafts is separated farther from the cylindrical inner peripheral surface of the inner ring as being closer to both sides in the joint axial direction from an end in the torque transmission direction, and
wherein a curvature radius ("r") of each of the convex curved lines at both ends in the torque transmission direction in the longitudinal section of the outer peripheral surface of each of the leg shafts is larger than a curvature radius (R) of each of the convex curved lines at both ends in the torque transmission direction in the cross section of the outer peripheral surface of each of the leg shafts.

In the present invention, as described above, the roller has the cylindrical outer peripheral surface, and the roller guide surfaces are each formed into the flat surface. In this case, when torque is applied, the flat roller guide surface and the cylindrical outer peripheral surface of the roller are pressed against each other through a linear contact portion therebetween. Thus, rightward/leftward inclination (see FIG. 11) of the roller can be suppressed. Further, when the pair of guide surfaces, which are abuttable against the roller from both sides in the direction of the axis of the roller, are formed on both sides of the roller guide surface in the width direction, the rightward/leftward inclination of the roller can be more reliably prevented.

Further, in the present invention, the inner ring has the cylindrical inner peripheral surface, and the outer peripheral surface of the leg shaft is formed to include the convex curved lines protruding toward the inner peripheral surface of the inner ring in the longitudinal section and the cross section. The convex curved lines in the cross section of the outer peripheral surface of the leg shaft each have such a shape that the convex curved line is separated farther from the cylindrical inner peripheral surface as being closer to both sides in the joint axial direction from the end in the torque transmission direction. As a result, a length of the contact portion in a leg shaft circumferential direction (that is, a major axis of a contact ellipse) between the outer peripheral surface of the leg shaft and the inner peripheral surface of the inner ring in the cross section is shortened. Thus, a force (moment) for inclining the roller is reduced. In this case, however, a contact area between the leg shaft and the inner ring is reduced. Thus, there is a concern about an increase in contact pressure on the contact portion between the leg shaft and the inner ring. Accordingly, in the present invention, the curvature radius ("r") of each of the convex curved lines in the longitudinal section of the outer peripheral surface of the leg shaft is set larger than the curvature radius (R) of each of the convex curved lines in the cross section of the outer peripheral surface of the leg shaft. As a result, a length of the contact portion in the direction of the axis of the leg shaft (that is, a minor axis of the contact ellipse) between the outer peripheral surface of the leg shaft and the inner peripheral surface of the inner ring is increased. Thus, an increase in contact pressure on the contact portion therebetween can be suppressed.

In the above-mentioned tripod type constant velocity universal joint, for example, each of the rollers comprises chamfers that connect the cylindrical outer peripheral surface and end surfaces on both sides in the direction of the axis, and the chamfers and the guide surfaces may be abuttable against each other in the direction of the axis of the roller (width direction).

It is preferred that the curvature radius "r" of each of the convex curved lines in the longitudinal section of the outer peripheral surface of each of the leg shafts be larger than half (A/2) of a maximum dimension of each of the leg shafts in the torque transmission direction. Further, it is preferred that the curvature radius (R) of each of the convex curved lines in the cross section of the outer peripheral surface of each of the leg shafts be smaller than the half (A/2) of the maximum dimension of each of the leg shafts in the torque transmission direction.

In the above-mentioned tripod type constant velocity universal joint, the outer peripheral surface of each of the leg shafts and the cylindrical inner peripheral surface of the inner ring may be held in contact with each other in the torque transmission direction and define gaps therebetween in the joint axial direction.

In the above-mentioned tripod type constant velocity universal joint, when torque is applied, the roller is pressed against one of the roller guide surfaces of each of the track grooves. At this time, a gap is defined between the roller and another one of the roller guide surfaces of each of the track grooves. In the present invention, the roller guide surface formed of the flat surface and the cylindrical surface of the outer peripheral surface of the roller are opposed to each other, and the guide surfaces are formed on both sides of the roller guide surface in the width direction. Thus, when the roller is slightly inclined, the outer peripheral surface or the chamfers of the roller may be brought into contact with the roller guide surface or the guide surfaces on a torque non-application side and contact resistance may be increased thereby. Thus, it is preferred that an initial gap between the roller and the roller guide surface (difference between a distance between the pair of roller guide surfaces and an outer diameter of the roller), a shape of the guide surface and the like be designed so that, when torque is applied, the roller is brought into contact with one (torque application side) of the roller guide surfaces of each of the track grooves and is not brought into contact with another one (torque non-application side) of the roller guide surfaces of each of the track grooves or the guide surfaces on both sides thereof in the width direction.

The above-mentioned tripod type constant velocity universal joint may further comprise rolling elements arranged between the roller and the inner ring. The rolling elements may, for example, be a plurality of needle rollers arranged in a full complement state between the roller and the inner ring.

### Advantageous Effects of Invention

As described above, with the tripod type constant velocity universal joint of a double roller type according to the present invention, contact resistance in regions other than a torque transmission portion is reduced by preventing the rightward/leftward inclination and the forward/rearward inclination of the roller while reducing the contact pressure between the leg shaft and the inner ring to maintain durability. As a result, the NVH characteristics of the constant velocity universal joint can be improved.

### Brief Description of Drawings

FIG. 1 is a sectional view of a tripod type constant velocity universal joint of a double roller type in a joint axial direction.
FIG. 2 is a partial sectional view taken along the line **K-**K of FIG. 1.
FIG. 3 is an enlarged view of FIG. 2.
FIG. 4 is a sectional view taken along the line L-L of FIG. 1.
FIG. 5 is a side view for illustrating a tripod member of FIG. 1 in an enlarged manner.
FIG. 6 is a sectional view for illustrating a state in which the tripod type constant velocity universal joint of FIG. 1 takes an operating angle.
FIG. 7 is a sectional view of a related-art tripod type constant velocity universal joint in a joint axial direction.
FIG. 8 is a partial sectional view taken along the line K-K of FIG. 7.
FIG. 9 is a sectional view taken along the line L-L of FIG. 7.
FIG. 10 is a sectional view for illustrating a state in which the tripod type constant velocity universal joint of FIG. 7 takes an operating angle.
FIG. 11 is a sectional view of the tripod type constant velocity universal joint of FIG. 7, which is orthogonal to the joint axial direction, for illustrating a state in which rightward/leftward inclination of a roller unit is occurring.
FIG. 12 is a sectional view of the tripod type constant velocity universal joint of FIG. 7 in the joint axial direction, for illustrating a state in which forward/rearward inclination of the roller unit is occurring.
FIG. 13 is a sectional view of another related-art tripod type constant velocity universal joint in a direction orthogonal to a joint axial direction.
FIG. 14 is a sectional view of a tripod member of the tripod type constant velocity universal joint in the joint axial direction.

### Description of Embodiments

A tripod type constant velocity universal joint according to one embodiment of the present invention is described with reference to the drawings.

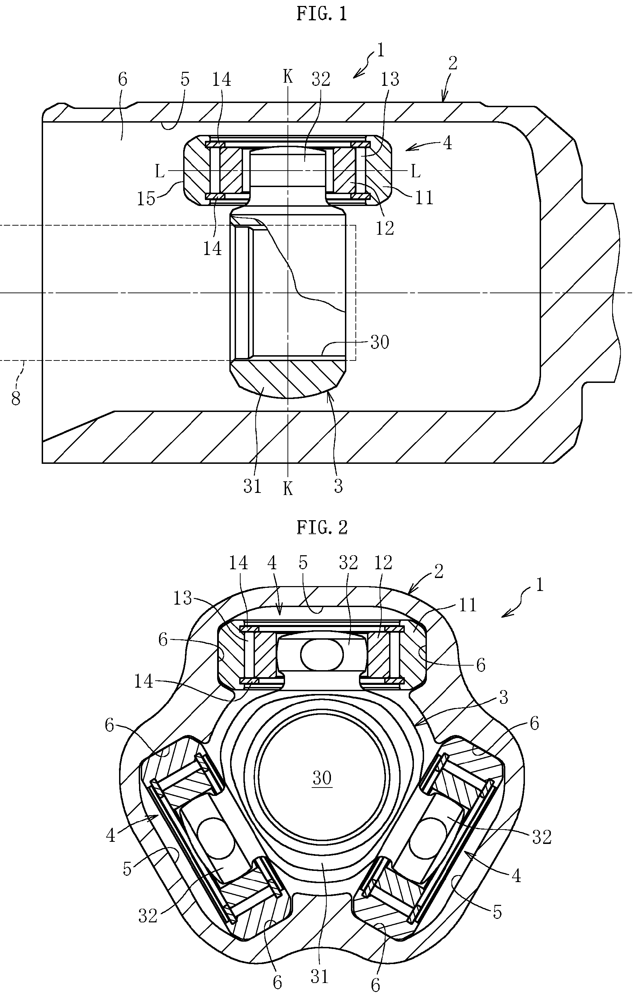

A tripod type constant velocity universal joint 1 according to this embodiment, which is illustrated in FIG. 1 to FIG. 4, is of a double roller type. In the following description, a direction of an axis of the tripod type constant velocity universal joint when an operating angle is set to 0° is referred to as "joint axial direction", and a circumferential direction and a radial direction about this axis are referred to as "joint circumferential direction" and "joint radial direction", respectively.

As illustrated in FIG. 1 and FIG. 2, this tripod type constant velocity universal joint 1 comprises an outer joint member 2, a tripod member 3 serving as an inner joint member, and roller units 4 serving as torque transmission members.

The outer joint member 2 is formed into a cup shape that is opened at one end and is closed at another end in the joint axial direction (see FIG. 1). In an inner peripheral surface of the outer joint member 2, three linear track grooves 5 extending in the joint axial direction are formed at equal intervals in the joint circumferential direction (see FIG. 2). Each of the track grooves 5 has a pair of roller guide surfaces 6, which are arranged so as to be opposed to each other in the joint circumferential direction. Each of the roller guide surfaces 6 extends in the joint axial direction. The outer joint member 2 receives therein the tripod member 3 and the roller units 4.

The tripod member 3 integrally comprises: a barrel 31 (trunnion barrel) having a center hole 30; and three leg shafts 32 (trunnion journals) projecting in a radial direction from trisected positions on an outer peripheral surface of the barrel 31 in the joint circumferential direction. A male spline formed on a shaft 8 is fitted to a female spline formed on the center hole 30 of the barrel 31, and the shaft 8 and the barrel 31 are fixed in the joint axial direction with a stopper ring or the like. As a result, the tripod member 3 and the shaft 8 are coupled to each other to allow torque transmission therebetween.

The roller units 4 are provided on outer peripheries of the leg shafts 32 of the tripod member 3, and are received in the track grooves 5 of the outer joint member 2, respectively. The roller units 4 each comprise: an outer ring 11 being an annular roller having an axis of the leg shaft 32 as a center; an inner ring 12 having an annular shape, which is arranged on an inner periphery of the outer ring 11 and is externally fitted to the leg shaft 32; and rolling elements 13 interposed between the outer ring 11 and the inner ring 12. In this embodiment, as one example of the rolling elements 13, multiple needle rollers in a full complement state without a cage are used. A cylindrical inner peripheral surface of the outer ring 11 serves as an outer raceway surface, and a cylindrical outer peripheral surface of the inner ring 12 serves as an inner raceway surface. The needle rollers 13 are arranged between the outer raceway surface and the inner raceway surface in a freely rollable manner. The roller unit 4, which comprises the outer ring 11, the inner ring 12, and the needle rollers 13, has a structure that is not naturally separable owing to a pair of snap rings 14.

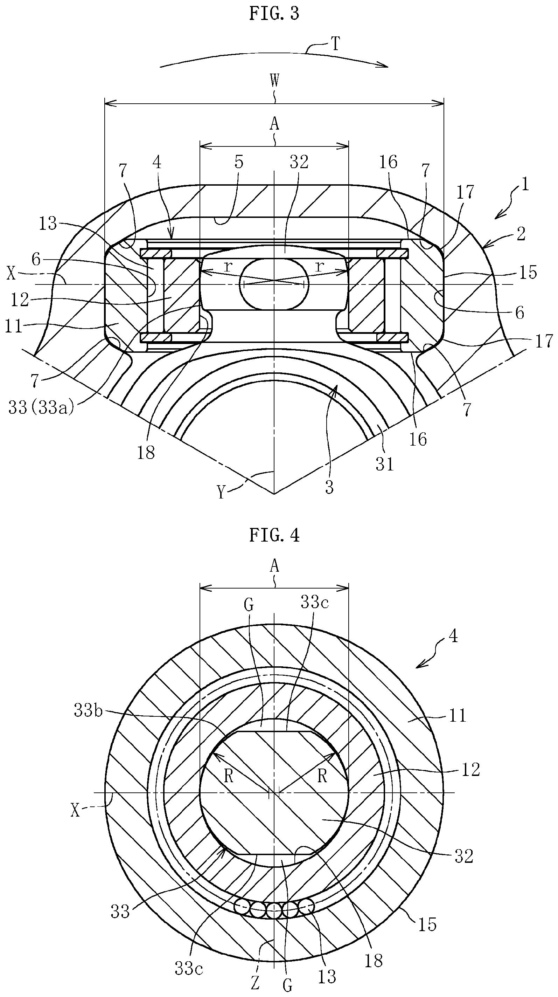

Now, a shape of the roller guide surface 6 and a shape of an outer peripheral surface 15 of the outer ring 11, which are one of the characteristic configurations of the present invention, are described in detail with reference to FIG. 3 and FIG. 4. In FIG. 3 and FIG. 4, the joint axial direction is illustrated as "Z direction", a direction of the axis of the leg shaft 32 is illustrated as "Y direction", and a torque transmission direction being orthogonal to both of the joint axial direction Z and the leg shaft axis direction Y is illustrated as "X direction".

The outer peripheral surface 15 of the outer ring 11 is formed into a cylindrical surface having the axis of the leg shaft 32 as a center. End surfaces 16 of the outer ring 11 on both sides in its axial direction are formed into flat surfaces orthogonal to the axis thereof (see FIG. 3). The outer peripheral surface 15 and both end surfaces 16 of the outer ring 11 are connected through intermediation of chamfers 17. The chamfers 17 each comprise, for example, a tapered surface with a linear section and a convex curved surface with a curved (for example, arc-shaped) section, which smoothly connects the tapered surface and the outer peripheral surface 15 and the end surface 16.

The pair of roller guide surfaces 6 of each of the track grooves 5 of the outer joint member 2 are formed into flat surfaces being parallel to each other. A pair of guide surfaces 7 are formed on both sides of each of the roller guide surfaces 6 in a width direction (Y direction). The guide surfaces 7 rise from both ends of the roller guide surface 6 in the width direction toward the axis Y of the leg shaft 32. Shapes of the roller guide surfaces 6 and the guide surfaces 7 conform with the shapes of the outer peripheral surface 15 and the chamfers 17 of the outer ring 11. Specifically, in a section illustrated in FIG. 3, the roller guide surfaces 6 and the outer peripheral surface 15 of the outer ring 11 are parallel to each other, and a distance W between the pair of roller guide surfaces 6 being opposed to each other is slightly larger than a diameter of the outer peripheral surface 15 of the outer ring 11. As a result, a slight gap in the X direction is defined between each of the roller guide surfaces 6 and the outer peripheral surface 15 of the outer ring 11. Further, the guide surfaces 7 are substantially parallel to the chamfers 17 of the outer ring 11 in the section illustrated in FIG. 3, and each comprise, for example, an inclined surface with a linear section and a concave curved surface with a curved (for example, arc-shaped) section, which smoothly connects the inclined surface and the roller guide surface 6. A distance in the Y direction between the pair of guide surfaces 7 formed on both sides of the roller guide surface 6 in the width direction is slightly larger than a distance in the Y direction between the pair of chamfers 17 formed on both sides of the outer peripheral surface 15 of the outer ring 11 in the width direction. As a result, a slight gap in the Y direction is defined between the guide surface 7 and the chamfer 17 of the outer ring 11.

When torque in the direction indicated by the arrow T of FIG. 3 is applied to the outer joint member 2, the outer peripheral surface 15 of the outer ring 11 is pressed onto the left roller guide surface 6 in FIG. 3. In this embodiment, as described above, the roller guide surfaces 6 are flat surfaces, and the outer peripheral surface 15 of the outer ring 11 is a cylindrical surface. Thus, the roller guide surface 6 and the outer peripheral surface 15 are pressed onto each other through a linear contact portion therebetween. As a result, a posture of the outer ring 11 is corrected so that the outer peripheral surface 15 of the outer ring 11 becomes parallel to the roller guide surfaces 6 in the section of FIG. 3, and hence rightward/leftward inclination (see FIG. 11) of the outer ring 11 can be suppressed. Further, the guide surfaces 7 are brought into abutment against the chamfers 17 of the outer ring 11 in the Y direction. Thus, forward/rearward inclination (see FIG. 12) of the outer ring 11 is restricted, and the rightward/leftward inclination of the outer ring 11 is further suppressed.

When the torque in the direction indicated by the arrow T of FIG. 3 is applied to the outer joint member 2 as described above, the outer peripheral surface 15 of the outer ring 11 is pressed onto the left roller guide surface 6 (hereinafter referred to as "torque application side roller guide surface 6") in FIG. 3. Meanwhile, a gap is defined between the right roller guide surface 6 (hereinafter referred to as "torque non-application side roller guide surface 6") in FIG. 3 and the guide surfaces 7 on both sides of the torque non-application side roller guide surface 6 in the width direction, and the outer peripheral surface 15 and the chamfers 17 of the outer ring 11. In this case, when the roller unit 4 is inclined and the outer peripheral surface 15 and the chamfers 17 of the outer ring 11 are brought into contact with the roller guide surface 6 and the guide surfaces 7 on the torque non-application side, rotation resistance of the outer ring 11 is increased.

Thus, in this embodiment, an initial gap between the outer ring 11 and the roller guide surfaces 6 (a difference between the distance W between the pair of roller guide surfaces 6 opposed to each other and the outer diameter of the outer ring 11), a shape of each of the guide surfaces 7 and the like are designed so that, when the torque is applied to the tripod member 3, the outer ring 11 is brought into contact with the torque application side roller guide surface 6 and is not brought into contact with the torque non-application side roller guide surface 6 or the guide surfaces 7 on both sides thereof in the width direction.

Next, a shape of an inner peripheral surface 18 and a shape of an outer peripheral surface 33 of the leg shaft 32, which are another characteristic configuration of the present invention, are described in detail with reference to FIG. 3 and FIG. 4.

The inner peripheral surface 18 of the inner ring 12 is formed into a cylindrical surface being parallel to the leg shaft axis direction Y. This cylindrical inner peripheral surface 18 is fitted to the outer peripheral surface 33 of the leg shaft 32.

As illustrated in FIG. 3, in plan view of the leg shaft 32 when seen in the joint axial direction (direction orthogonal to the drawing sheet of FIG. 3), that is, in a longitudinal section containing the axis of the leg shaft 32, the outer peripheral surface 33 of the leg shaft 32 has convex curved lines protruding to both sides in the torque transmission direction X. In the illustrated example, the convex curved lines in the longitudinal section of the outer peripheral surface of the leg shaft 32 are each formed of an arc 33a having a curvature radius "r". As a result, a vertex (end in the X direction) of the arc 33a of the outer peripheral surface of the leg shaft 32 is held in contact with the cylindrical inner peripheral surface 18 of the inner ring 12. A gap between the outer peripheral surface 33 of the leg shaft 32 and the inner peripheral surface 18 of the inner ring 12 gradually increases from the vertex of the arc 33a toward both sides in the Y direction.

In a cross section of the leg shaft 32 in the direction orthogonal to its own axis (cross section on a plane (line X of FIG. 3) passing through both ends of the leg shaft 32 in the torque transmission direction), which is illustrated in FIG. 4, the outer peripheral surface of the leg shaft 32 has convex curved lines protruding toward both sides in the torque transmission direction X. In the illustrated example, the convex curved lines of the outer peripheral surface of the leg shaft 32 in the cross section are each formed of an arc 33b having a curvature radius R. When a maximum dimension of the leg shaft 32 in the torque transmission direction X is represented by A, the curvature radius R of the arc 33b is smaller than half A/2 thereof (≈radius of the cylindrical inner peripheral surface 18 of the inner ring 12). Thus, the arcs 33b of the outer peripheral surface of the leg shaft 32 are held in contact with the cylindrical inner peripheral surface 18 of the inner ring 12 at their vertices (ends in the X direction), and are each separated farther from the inner peripheral surface 18 of the inner ring 12 as being closer to both sides in the Z direction from the vertex. As a result, the outer peripheral surface 33 of the leg shaft 32 and the inner peripheral surface 18 of the inner ring 12 are held in contact with each other in the X direction and define gaps G therebetween in the Z direction. In the illustrated example, flat surfaces 33c, each being orthogonal to the Z direction, are formed in regions including both ends in the Z direction in the cross section of the outer peripheral surface 33 of the leg shaft 32. As a result, the gap G in the Z direction between each of the flat surfaces 33c of the outer peripheral surface 33 of the leg shaft 32 and the inner peripheral surface 18 of the inner ring 12 is increased.

As described above, the outer peripheral surface 33 of the leg shaft 32 has a non-spherical shape with the curvature radius "r" of each of the convex curved lines (arcs 33a) in the longitudinal section and the curvature radius R of each of the convex curved lines (arcs 33b) in the cross section being different from each other.

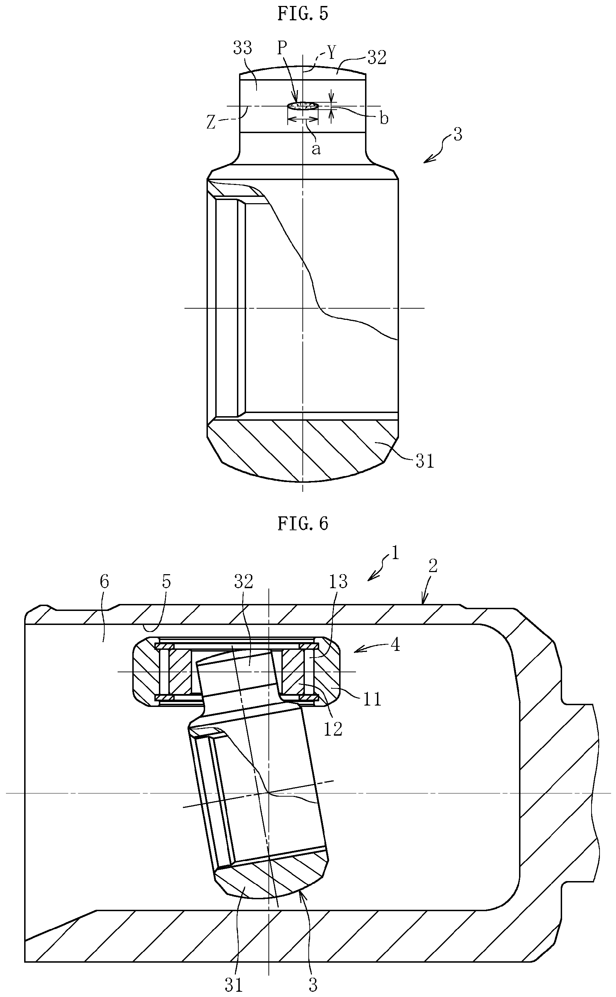

The inner peripheral surface 18 of the inner ring 12 is a cylindrical surface, and the longitudinal section and the cross section of the outer peripheral surface of the leg shaft 32 comprise the convex curved lines. As a result, the inner ring 12 is rockable with respect to the leg shaft 32. As described above, the inner ring 12 and the outer ring 11 is formed into an assembly in which the inner ring 12 and the outer ring 11 are freely rotatable relative to each other through intermediation of the needle rollers 13. Thus, the outer ring 11 can rock integrally with the inner ring 12 with respect to the leg shaft 32. That is, an axis of the outer ring 11 and an axis of the inner ring 12 can be inclined with respect to the axis of the leg shaft 32 in a plane containing the axis of the leg shaft 32 (see FIG. 6).

As illustrated in FIG. 6, when the tripod type constant velocity universal joint 1 is rotated while taking an operating angle, an axis of the tripod member 3 is inclined with respect to an axis of the outer joint member 2. However, the roller unit 4 is rockable. Accordingly, the outer ring 11 and the roller guide surfaces 6 can be prevented from being brought into an oblique state. As a result, the outer ring 11 rolls horizontally with respect to the roller guide surfaces 6. Thus, induced thrust and sliding resistance can be reduced, and hence reduction in vibration of the tripod type constant velocity universal joint 1 can be achieved.

When torque is applied to the tripod member 3, the outer peripheral surface 33 of the leg shaft 32 is pressed against the inner peripheral surface 18 of the inner ring 12 to thereby define a contact portion P as illustrated in FIG. 5. In this embodiment, as described above, the curvature radius R (see FIG. 4) of each of the arcs 33b in the cross section of the outer peripheral surface 33 of the leg shaft 32 is smaller than the half (A/2) of the maximum dimension A of the leg shaft 32 in the torque transmission direction X. Thus, as compared to a case in which the curvature radius R and the half (A/2) are equal to each other, a length of the contact portion P illustrated in FIG. 5 in the Z direction (that is, a major axis "a" of a contact ellipse) can be reduced. As a result, a force (moment) for inclining the roller unit 4 comprising the inner ring 12 with respect to the axis of the joint is reduced.

As described above, when the major axis "a" of the contact portion P between the outer peripheral surface 33 of the leg shaft 32 and the inner peripheral surface 18 of the inner ring 12 is shortened, an area of the contact portion P is reduced. Thus, there arises a concern about an increase in contact pressure on the contact portion P. In this embodiment, the curvature radius "r" (see FIG. 3) of each of the arcs 33a in the longitudinal section of the outer peripheral surface 33 of the leg shaft 32 is larger than the curvature radius R (see FIG. 4) of each of the arcs 33b in the cross section of the outer peripheral surface 33 of the leg shaft 32, and further is larger than the half (A/2) of the maximum dimension A of the leg shaft 32 in the torque transmission direction X. As a result, a length of the contact portion P illustrated in FIG. 5 in the Y direction between the outer peripheral surface 33 of the leg shaft 32 and the inner peripheral surface 18 of the inner ring 12 (that is, a minor axis "b" of the contact ellipse) is increased. Thus, an increase in contact pressure can be suppressed.

As described above, a ratio of the major axis "a" and the minor axis "b" of the contact portion P between the outer peripheral surface 33 of the leg shaft 32 and the inner peripheral surface 18 of the inner ring 12 can be adjusted by adjusting the curvature radius R of each of the arcs 33b in the cross section of the outer peripheral surface 33 of the leg shaft 32 and the curvature radius "r" of each of the arcs 33a in the longitudinal section of the outer peripheral surface 33 of the leg shaft 32. That is, the above-mentioned curvature radii "r" and R are set so that the inclination of the outer ring 11 is suppressed to fall within an allowable range to thereby sufficiently reduce the induced thrust and the sliding resistance while durability is ensured by suppressing the contact pressure on the contact portion P between the inner ring 12 and the leg shaft 32 so that the contact pressure falls within an allowable range. Specifically, for example, the above-mentioned curvature radii "r" and R are set so that the ratio a/b of the major axis "a" and the minor axis "b" of the above-mentioned contact portion P falls within a range of, for example, from 2 to 10, preferably from 3 to 6.

The present invention is not limited to the embodiment described above. Now, description is made of other embodiments of the present invention, but description of points similar to those in the embodiment described are omitted.

In the embodiment described above, the convex curved lines of the outer peripheral surface of the leg shafts in the longitudinal section and those in the cross section are both formed of arcs. However, the convex curved lines are not limited to those described above. For example, the convex curved lines of the outer peripheral surface of the leg shaft 32 in the longitudinal section may be each formed of a non-arc-shaped curved line such as an ellipse. In this case, a curvature radius of each of the convex curved lines (ellipse) at least at both ends (that is, the contact portions with the inner ring 12) in the torque transmission direction (curvature radius of each of pseudo-arcs at both ends in the torque transmission direction because the convex curved lines are not arcs: the same shall apply hereinafter) in the longitudinal section of the outer peripheral surface of the leg shaft 32 is larger than the curvature radius R of each of the convex curved lines (arcs 33b) in the cross section of the outer peripheral surface of the leg shaft 32, preferably, is larger than the half (A/2) of the maximum dimension A of the leg shaft 32 in the torque transmission direction X.

Further, the convex curved lines of the outer peripheral surface of the leg shaft 32 in the cross section may be each formed of a non-arc-shaped curved line such as an ellipse. In this case, a curvature radius of each of the convex curved lines (ellipse) at least at both ends (that is, the contact portions with the inner ring 12) in the torque transmission direction in the cross section of the outer peripheral surface of the leg shaft 32 is smaller than the half (A/2) of the maximum dimension A of the leg shaft 32 in the torque transmission direction X.

Further, both of the convex curved lines of the outer peripheral surface of the leg shaft 32 in the longitudinal section and those in the cross section may be each formed of a non-arc-shaped curved line such as an ellipse. In this case, a curvature radius of the convex curved lines (ellipse) in the longitudinal section of the outer peripheral surface of the leg shaft 32 at least at both ends (that is, the contact portions with the inner ring 12) in the torque transmission direction is larger than the curvature radius of each of the convex curved lines (ellipse) at least at both ends in the torque transmission direction (that is, the contact portions with the inner ring 12) in the cross section of the outer peripheral surface of the leg shaft. Preferably, the curvature radius of each of the convex curved lines (ellipse) in the longitudinal section of the outer peripheral surface of the leg shaft 32 at least at both ends in the torque transmission direction is larger than the half (A/2) of the maximum dimension A of the leg shaft 32 in the torque transmission direction X, and the curvature radius of each of the convex curved lines (ellipse) at least at both ends in the torque transmission direction in the cross section of the outer peripheral surface of the leg shaft 32 is smaller than the half (A/2) of the maximum dimension A of the leg shaft 32 in the torque transmission direction X.

Further, in the above-mentioned embodiment, as illustrated in FIG. 4, the flat surfaces 33c are formed at both ends of the leg shaft 32 in the joint axial direction. However, when a sufficient gap that allows the roller unit 4 to rock with respect to the leg shaft 32 is defined between the leg shaft 32 and the inner ring 12 in the joint axial direction even without the flat surfaces 33c, the flat surfaces 33c may be omitted.

The tripod type constant velocity universal joint 1 described above is applied not exclusively to drive shafts for automobiles, but can be widely used for power transmission paths in automobiles, industrial machines and the like.

### Reference Signs List

1 tripod type constant velocity universal joint
2 outer joint member
3 tripod member
4 roller unit
5 track groove
6 roller guide surface
7 guide surface
8 shaft
11 outer ring (roller)
12 inner ring
13 rolling element
14 snap ring
31 barrel
32 leg shaft
33 outer peripheral surface
33a arc (convex curved line)
33b arc (convex curved line)
P contact portion
X torque transmission direction
Y leg shaft axis direction
Z joint axial direction

## Claims

1. A tripod type constant velocity universal joint, comprising:
an outer joint member having three track grooves, each extending in a joint axial direction, formed in an inner peripheral surface, the track grooves each comprising a pair of roller guide surfaces opposed to each other in a joint circumferential direction;
a tripod member, which is arranged on an inner periphery of the outer joint member and comprises three leg shafts projecting in a joint radial direction into the track grooves; and
three roller units each comprising a roller arranged on an outer periphery of each of the leg shafts and an inner ring arranged between the roller and the leg shaft, the roller units being supported in a rotatable and rockable state by the leg shafts and being received in the track grooves, respectively,
wherein the rollers each comprise a cylindrical outer peripheral surface,
wherein the pair of roller guide surfaces of each of the track grooves are formed into flat surfaces being parallel to each other,
wherein a pair of guide surfaces being abuttable against the roller from both sides in a direction of an axis of the roller are formed on both sides of each of the roller guide surfaces in a width direction of the roller guide surface,
wherein the inner ring comprises a cylindrical inner peripheral surface,
wherein an outer peripheral surface of each of the leg shafts comprises convex curved lines protruding to both sides in a torque transmission direction in a longitudinal section containing an axis of the leg shaft and in a cross section orthogonal to the axis of the leg shaft,
wherein each of the convex curved lines in the cross section of the outer peripheral surface of each of the leg shafts is separated farther from the cylindrical inner peripheral surface of the inner ring as being closer to both sides in the joint axial direction from an end in the torque transmission direction, and
wherein a curvature radius ("r") of each of the convex curved lines at both ends in the torque transmission direction in the longitudinal section of the outer peripheral surface of each of the leg shafts is larger than a curvature radius (R) of each of the convex curved lines at both ends in the torque transmission direction in the cross section of the outer peripheral surface of each of the leg shafts.

2. The tripod type constant velocity universal joint according to claim 1, wherein each of the rollers comprises chamfers that connect the cylindrical outer peripheral surface and end surfaces on both sides in the direction of the axis, and the chamfers and the guide surfaces are abuttable against each other in the direction of the axis of the roller.

3. The tripod type constant velocity universal joint according to claim 1 or 2,
wherein the curvature radius ("r") of each of the convex curved lines at the both ends in the torque transmission direction in the longitudinal section of the outer peripheral surface of each of the leg shafts is larger than half (A/2) of a maximum dimension of each of the leg shafts in the torque transmission direction, and
wherein the curvature radius (R) of each of the convex curved lines at the both ends in the torque transmission direction in the cross section of the outer peripheral surface of each of the leg shafts is smaller than the half (A/2) of the maximum dimension of each of the leg shafts in the torque transmission direction.

4. The tripod type constant velocity universal joint according to claim 1 or 2, wherein the outer peripheral surface of each of the leg shafts and the cylindrical inner peripheral surface of the inner ring are held in contact with each other in the torque transmission direction and define gaps therebetween in the joint axial direction.

5. The tripod type constant velocity universal joint according to claim 1 or 2, wherein, when torque is applied, the roller is brought into contact with one of the roller guide surfaces of each of the track grooves and remains noncontact with another one of the roller guide surfaces of each of the track grooves and the guide surfaces on both sides of the another roller guide surface in the width direction.

6. The tripod type constant velocity universal joint according to claim 1 or 2, further comprising rolling elements arranged between the roller and the inner ring.

7. The tripod type constant velocity universal joint according to claim 6, wherein the rolling elements are a plurality of needle rollers arranged in a full complement state between the roller and the inner ring.
